# EUROPEAN PATENT APPLICATION

(11) **EP 2 006 856 A1**
(43) Date of publication of application: **24.12.2008**
(21) Application number: 08158377.5
(22) Date of filing: 17.06.2008
(51) Int. Cl.: G11B 27/10, G11B 27/34, H04S 3/00

(54) **Audio playing apparatus and audio playing method**

(30) Priority: 18.06.2007 JP 2007159814
(71) Applicant: Sony Corporation, Tokyo 108-0075 (JP)
(72) Inventor: Kasa, Masanori, Tokyo 108-0075 (JP); Kanda, Satoru, Tokyo 108-0075 (JP); Inokuchi, Tatsuya, Tokyo 108-0075 (JP); Goto, Makoto, Tokyo 108-0075 (JP); Ohgami, Takahisa, Tokyo 108-0075 (JP); Kihara, Takashi, Tokyo 108-0075 (JP)
(74) Representative: Beder, Jens

(57) **Abstract**

An audio playing apparatus that plays a multiplexed audio stream resulting from the multiplexing of multiple kinds of audio is disclosed. The apparatus can be switched at least between a mixing output mode for mixing decoded data or uncompressed data of the audio streams of multiple kinds of audio and outputting the result to one audio output terminal and a separate output mode for outputting the audio streams of multiple kinds of audio to separate audio output terminals independently.

## Description

### CROSS REFERENCES TO RELATED APPLICATIONS

The present invention contains subject matter related to Japanese Patent Application JP 2007-159814 filed in the Japanese Patent Office on June 18, 2007, the entire contents of which being incorporated herein by reference.

### BACKGROUND OF THE INVENTION

### 1. Field of the Invention

The present invention relates to an apparatus and method of playing a multiplexed audio stream recorded on a recording medium such as a Blu-ray Disc (BD) or a multiplexed audio stream received by broadcasting or network distribution.

### 2. Description of the Related Art

In order to play audio of data compressed by a predetermined compression method or uncompressed PCM data (Pulse Code Modulation) data, which is recorded as a bit stream on the recording medium, from a recording medium such as a DVD, the audio stream is demultiplexed from a video stream, which is multiplexed therewith and recorded on the recording medium to play, and, the audio stream is decoded (decompressed) if the audio stream is compressed data, is converted to an analog audio signal and is supplied to a speaker or a headphone.

In connection with that, JP-A-10-106168 (Patent Document 1) discloses that identical stereo audio data recorded on a DVD is divided to three kinds of audios of output terminals, which are output simultaneously, and that multiplexed Japanese, English and French audio data, which is recorded on a DVD, is divided into separate output terminals, which are output simultaneously, meaning that Japanese audio, English audio and French audio are output from separate headphones, respectively.

On the other hand, on a BD, interactive audio may be multiplexed as audio streams by handling, for example, conversations and music, a talk by the director of a movie and operation audios as audio 1, audio 2 and audio 3, respectively. Then, the audio streams may be multiplexed with a video stream of a movie, for example, the result of which can be recorded on the disk.

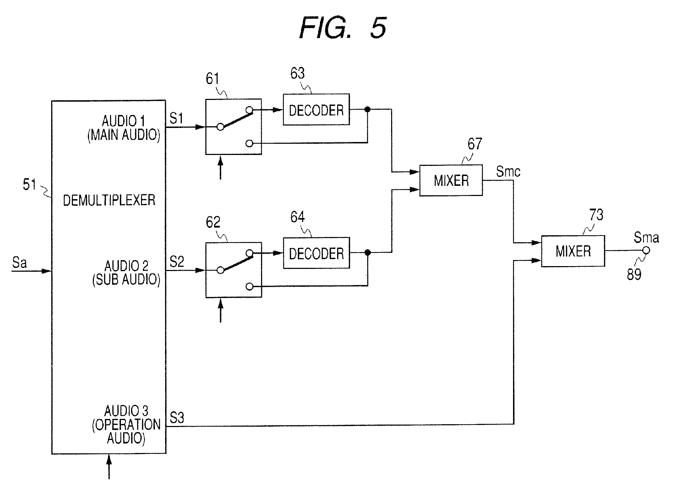

Fig. 5 shows an example of the audio output in the playback operation in that case. As described above, an audio stream S1 of the audio 1, an audio stream S2 of the audio 2 and an audio stream S3 of the audio 3 are multiplexed with a video stream, and the result is recorded on a BD, not shown.

The audio stream S1 of the audio 1 and the audio stream S2 of the audio 2 are compressed or uncompressed data, and the audio stream S3 of the audio 3 is uncompressed data.

From the BD, a signal resulting from the multiplexing of the video stream and the audio streams is read and played by an optical head, not shown. The played output signal by the optical head is demultiplexed into the video stream and the audio stream by a video-audio demultiplexer, not shown.

The demultiplexed audio stream Sa is demultiplexed by a demultiplexer 51 into the audio stream S1 of the audio 1, the audio stream S2 of the audio 2 and the audio stream S3 of the audio 3.

The audio stream S1 if it is compressed data is decoded by a decoder 63 and is supplied to a mixer 67 by switching a switch 61 to the decoder 63 side. If the audio stream S1 is uncompressed data, it is supplied to the mixer 67 as it is by switching the switch 61 to the opposite side of the decoder 63 side.

The audio stream S2 if it is compressed data is also decoded by a decoder 64 and is supplied to the mixer 67 by switching a switch 62 to the decoder 64 side. If the audio stream S2 is uncompressed data, it is supplied to the mixer 67 directly by switching the switch 62 to the opposite side of the decoder 64 side.

Thus, the mixer 67 mixes the decoded data or uncompressed data of the audio streams S1 and S2 of the audios 1 and 2.

The audio stream Smc output by the mixer 67 and the audio stream S3, which is uncompressed data, of the audio 3 are supplied to a mixer 73. Then, an audio stream Sma resulting from the mixing of the decoded data or uncompressed data of the audio streams S1, S2 and S3 of the audios 1, 2 and 3 is obtained at an audio output terminal 89.

The audio stream Sma output to the audio output terminal 89 is converted to an optical signal as digital data, is transmitted to an AV (Audio and Visual) amplifier via a cable and is converted to an analog audio signal by the AV amplifier.

### SUMMARY OF THE INVENTION

However, in the audio playing method shown in Fig. 5, the decoded data or uncompressed data of the audio streams S1, S2 and S3 of the audios 1, 2 and 3 are mixed and are output. Therefore, the audio quality is deteriorated, and, if the audio 1 is for music in particular, the music is no longer played purely.

According to embodiments of the invention, a multiplexed audio stream resulting from the multiplexing multiple kinds of audio can be played in high quality, and the music can be played purely.

According to one embodiment of the present invention, there is provided an audio playing apparatus that plays a multiplexed audio stream resulting from the multiplexing of multiple kinds of audio,
wherein the apparatus can be switched at least between a mixing output mode for mixing decoded data or uncompressed data of the audio streams of multiple kinds of audio and outputting the result to one audio output terminal and a separate output mode for outputting the audio streams of multiple kinds of audio to separate audio output terminals independently.

The audio playing apparatus can play audio in high quality and play music purely by switching to the separate output mode such that audio streams of multiple kinds of audio can be output independently through separate audio output terminals, without mixing.

Furthermore, the apparatus can be configured such that, when a part or all of the audio streams is or are compressed data in the separate output mode, the apparatus may be switched between an undecoded output mode for outputting the compressed data to the audio output terminal as it is and a decoded output mode for decoding and outputting the compressed data to the audio output terminal. With this configuration, the quality of the audio can be increased by selecting the undecoded output mode and decoding compressed data by an external decoder.

### BRIEF DESCRIPTION OF THE DRAWINGS

Fig. 1 is a diagram showing an example of the BD player, which is an example of the audio playing apparatus according to an embodiment of the invention;
Fig. 2 is a diagram showing an example of the audio output unit of the BD player in Fig. 1;
Fig. 3 is a diagram showing how switches are switched in audio output modes;
Fig. 4 is a diagram showing how switches are switched in a separate output mode; and
Fig. 5 is a diagram showing an example of the audio output unit of a BD player.

### DESCRIPTION OF THE PREFERRED EMBODIMENTS

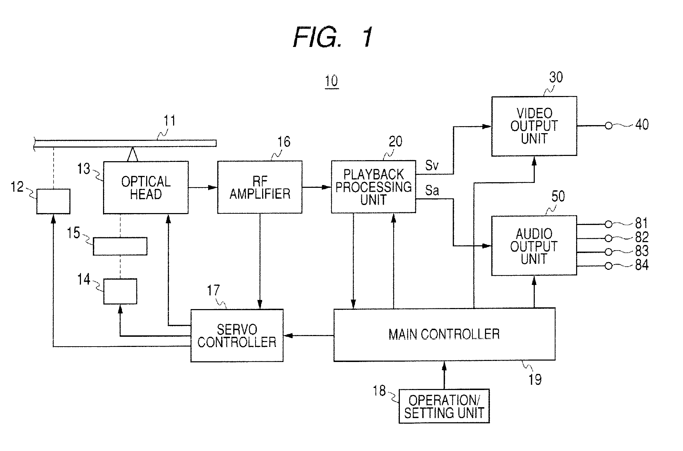

### [I. Embodiments of Audio Playing Apparatus and Audio Playing Method: Figs. 1 to 4]]

### (1-1. Entire Configuration of Audio Playing Apparatus: Fig. 1)

Fig. 1 shows an example of the BD player, which is an example of the audio playing apparatus according to an embodiment of the invention.

A BD (BLU-ray Disc) 11 records the result of multiplexing of a video stream and an audio stream. The BD 11 is driven to rotate by a spindle motor 12.

An optical head 13 irradiates laser light from a blue-violet laser to the BD 11 through an objective lens and receives the return light from the BD 11 by a photoreceptor (or photodetector) through the objective lens. The optical head 13 further includes a biaxial actuator that drives the objective lens in the focus direction and the tracking direction. A feeding mechanism 15 is driven by a feed motor 14, whereby the optical head 13 is fed in the radial direction of the BD 11.

The output signal of the photoreceptor of the optical head 13 is transmitted to an RF amplifier 16, and a focus error signal and a tracking error signal are transmitted from the RF amplifier 16 to a servo controller 17. The servo controller 17 controls driving of a spindle motor 12, the feed motor 14 and the biaxial actuator of the optical head 13.

The multiplexed stream playback signal in the received light output signal is transmitted from the RF amplifier 16 to a playback processing unit 20 and is demodulated by the playback processing unit 20 and is further demultiplexed into a video stream Sv and an audio stream Sa.

The video stream Sv is a bit stream of a data compressed by a compression method such as MPEG (Moving Picture Experts Group) and is decoded by a video output section 30 or is output to a video output terminal 40 without decoding and is transmitted from the video output terminal 40 to an AV amplifier. If the video stream Sv is not decoded by the video output section 30, the video stream Sv is decoded by the AV amplifier, and the image is displayed on the display connecting to the AV amplifier.

On the other hand, the audio stream Sa is the result of multiplexing of audio streams of audios 1, 2 and 3 as will be described later and is processed by an audio output unit 5 as will be described later. The processed audio stream is output to audio output terminals 81 to 84.

In an operation/setting section 18, a user performs an operation or setting for selecting an audio output mode or an audio output terminal. A main controller 19 controls the components of the BD player 10 by switching the audio output modes or the audio output terminals according to the operation or setting in the operation/setting unit 18.

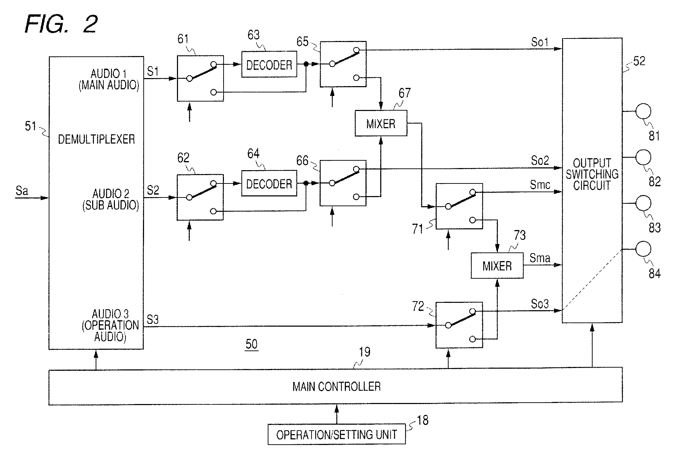

### (1-2. Configuration and Operations of Audio Output Unit: Figs. 2 to 4)

Fig. 2 shows an example of the configuration of the audio output unit 50.

The audio stream recorded on the BD 11, that is, the audio stream Sa, which is demultiplexed from the video stream Sv by the playback processing unit 20 and is transmitted to the audio output unit 50, is the result of multiplexing of the audio stream S1 of the audio 1, the audio stream S2 of the audio 2, and the audio stream S3 of the audio 3.

The audio 1 is a audio, which is main audio, such as conversations and music in a movie. The audio 2 is a audio, which is sub audio, such as a talk by the director of a movie. The audio 3 is an operation audio.

The audio stream S1 of the audio 1 and the audio stream S2 of the audio 2 are compressed data or uncompressed data, and the audio stream S3 of the audio 3 is uncompressed data.

In the audio output unit 50, the multiplexed audio stream Sa is demultiplexed into the audio stream S1 of the audio 1, the audio stream S2 of the audio 2, and the audio stream S3 of the audio 3 by a demultiplexer 51.

The audio output unit 50 has switches 61 and 62, decoders 63 and 64, switches 65 and 66, a mixer 67, switches 71 and 72, a mixer 73 and an output switching circuit 52.

The switches 61, 62, 65, 66, 71 and 72 are switched as will be described later by the main controller 19. The output switching circuit 52 is also switched as will be described later by the main controller 19.

Among audio output terminals 81 to 84, for example, the audio output terminal 81 may convert the data of an audio stream to an optical signal and transmits the optical signal from the BD player 10 to an AV amplifier. The audio output terminal 82 may transmit the data of an audio stream from the BD player 10 to the AV amplifier through a coaxial cable. The audio output terminal 83 may be an HDMI (High-Definition Multimedia Interface). The audio output terminal 84 may include an A/D converter that converts the data of an audio stream to an analog audio signal and an internal speaker that receives the supply of the analog audio signal.

In this example, the audio stream So3 among audio streams Sma, Smc, So1, So2 and So3, which will be described later, is transmitted to the audio output terminal 84. The operation audio of the audio 3 is output from the speaker internally contained in the BD player 10. The other audio streams Sma, Smc, So1 and So2 are transmitted to the AV amplifier from one of the other audio output terminals 81, 82 and 83 according to the selection in the operation/setting unit 18.

### [All-Mixing Output Mode]

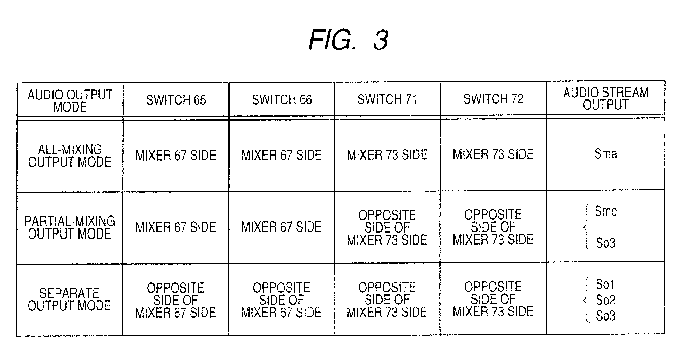

As shown in the top row in Fig. 3, if an all-mixing output mode is selected in the operation/setting unit 18, the switches 65 and 66 are switched to the mixer 67 side, and the switches 71 and 72 are also switched to the mixer 73 side.

The switch 61 is switched to the decoder 63 side such that, if the audio stream S1 of the audio 1 is compressed data, the compressed data can be decoded by the decoder 63. If the audio stream S1 is uncompressed data, the switch 61 is switched to the opposite side of the decoder 63 side such that the uncompressed data can be supplied to the switch 65 as it is.

In the same manner, the switch 62 is switched to the decoder 64 side such that, if the audio stream S2 of the audio 2 is compressed data, the compressed data can be decoded by the decoder 64. If the audio stream S2 is uncompressed data, the switch 62 is switched to the opposite side of the decoder 64 side such that the uncompressed data can be supplied to the switch 66 as it is.

Thus, in the all-mixing output mode, the mixer 67 mixes the decoded data or uncompressed data of the audio stream S1 of the audio 1 and the decoded data or uncompressed data of the audio stream S2 of the audio 2. The mixed audio stream Smc is obtained from the mixer 67. The mixer 73 mixes the audio stream Smc and the uncompressed data of the audio stream S3 of the audio 3. The mixed audio stream Sma is obtained from the mixer 73.

In other words, in the all-mixing output mode, the audio stream Sma resulting from the mixing of the decoded data or uncompressed data of the audio streams S1, S2 and S3 of the audios 1, 2 and 3 may be only obtained as the audio stream output.

The audio stream Sma is supplied to one of the audio output terminals 81, 82 and 83 by the output switching circuit 52 and is transmitted from the audio output terminal to the AV amplifier.

In this case, operations in the operation/setting unit 18 can independently and arbitrarily adjust the volume of the audios 1, 2 and 3 and mute an arbitrary audio of the audios 1, 2 and 3.

The mixing to be performed in this case is the mixing between the audio data of the center channel in the audio stream S1 and the audio data of the audio streams S2 and S3 if the audio stream S1 is multi-surround audio data of 5.1 channels and if the audio streams S2 and S3 are audio data of one channel. If the audio stream S1 is stereo audio data of two channels and if the audio streams S2 and S3 are audio data of one channel, the audio data of the left channel in the audio stream S1 and the audio data of the audio streams S2 and S3 are mixed. Furthermore, the audio data of the right channel in the audio stream S1 and the audio data of the audio streams S2 and S3 are mixed.

### [Partial Mixing Output Mode]

As shown in the middle row of Fig. 3, if a partial mixing output mode is selected in the operation/setting unit 18, the switches 65 and 66 are switched to the mixer 67 side as in the case of the all-mixing output mode, and the switches 71 and 72 are switched to the opposite side of the mixer 73 side conversely to the case of the all-mixing output mode.

The switches 61 and 62 are switched in the same manner as in the case of the all-mixing output mode.

Thus, in the partial-mixing output mode, like the case of the all-mixing output mode, the mixer 67 mixes the decoded data or uncompressed data of the audio stream S1 of the audio 1 and the decoded data or uncompressed data of the audio stream S2 of the audio 2. The mixed audio stream Smc is also obtained from the mixer 67, but, unlike the case of the all-mixing output mode, the audio stream Smc is transmitted to the output switching circuit 52 through the switch 71 as it is. Furthermore, separately from that, the uncompressed data of the audio stream S3 of the audio 3 is transmitted to the output switching circuit 52 as the audio stream So3 through the switch 72 as it is.

Then, the audio stream Smc is supplied to one of the audio output terminals 81, 82 and 83 and is transmitted from the audio output terminal to the AV amplifier. The audio stream So3 is supplied to the audio output terminal 84 as described above, and the operation audio of the audio 3 is output from the internal speaker as described above.

Also in the partial-mixing output mode, operations on the operation/setting unit 18 can independently and arbitrarily adjust the volumes of the audios 1, 2 and 3 and mute an arbitrary audio of the audios 1, 2 and 3.

### [Separate Output Mode]

As shown in the bottom row of Fig. 3, if a separate output mode is selected in the operation/setting unit 18, the switches 65 and 66 are switched to the opposite side of the mixer 67 side, conversely to the case of the all-mixing output mode, and the switches 71 and 72 are also switched to the opposite side of the mixer 73, conversely to the case of the all-mixing output mode.

The switching of the switches 61 and 62 depends on the selection of either undecoded output mode or decoded output mode in the separate output mode.

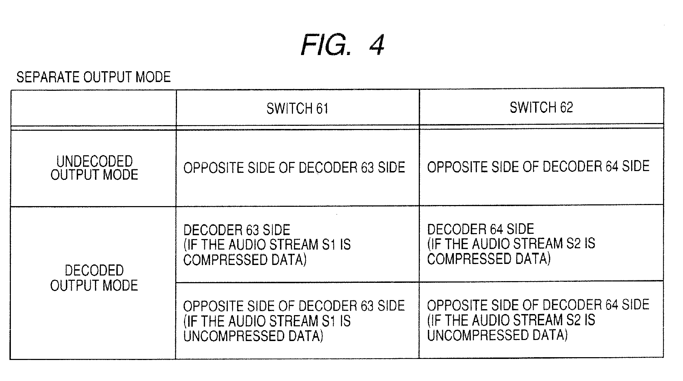

In other words, as shown in the top row in Fig. 4, if the undecoded output mode is selected, the switch 61 is switched to the opposite side of the decoder 63 side, and the switch 62 is also switched to the opposite side of the decoder 64 side.

Therefore, in the undecoded output mode in the separate output mode, the compressed data or uncompressed data of the audio stream S1 of the audio 1 is transmitted to the output switching circuit 52 through the switches 61 and 65 as the audio stream So1 as it is. The compressed data or uncompressed data of the audio stream S2 of the audio 2 is transmitted to the output switching circuit 52 as the audio stream So2 through the switches 62 and 66 as it is as in the case of the partial-mixing output mode. The uncompressed data of the audio stream S3 of the audio 3 is transmitted to the output switching circuit 52 as the audio stream So3 through the switch 72 as it is.

Then, the audio streams So1 and So2 are supplied to different output terminals among the audio output terminals 81, 82 and 83 and are transmitted from the respective output terminals to the AV amplifier. The audio stream So3 is supplied to the audio output terminal 84 as described above, and the operation audio of the audio 3 is output from the internal speaker as described above.

The audio streams S1 or S2, that is, the audio stream So1 or So2 is decoded by a decoder within the AV amplifier if it is compressed data.

On the other hand, as shown in the bottom row in Fig. 4, if the decoded output mode is selected, the switch 61 is switched to the decoder 63 side such that the audio stream S1 of the audio 1 can be decoded by the decoder 63 if it is compressed data. If the audio stream S1 is uncompressed data, the switch 61 is switched to the opposite side of the decoder 63 side such that the uncompressed data can be supplied to the switch 65 as it is. The switch 62 is also switched to the decoder 64 side such that the audio stream S2 of the audio 2 can be decoded by the decoder 64 if it is compressed data. If the audio stream S2 is uncompressed data, the switch 62 is switched to the opposite side of the decoder 64 such that the uncompressed data can be supplied to the switch 66 as it is.

Thus, in the decoded output mode in the separate output mode, the decoded data or uncompressed data of the audio stream S1 of the audio 1 is transmitted to the output switching circuit 52 as the audio stream So1 through the switch 65. The decoded data or uncompressed data of the audio stream S2 of the audio 2 is transmitted to the output switching circuit 52 as the audio stream So2 through the switch 66. Like the case of the undecoded output mode, the compressed data of the audio stream S3 of the audio 3 is transmitted to the output switching circuit 52 as the audio stream So3 through the switch 72 as it is.

Then, the audio streams So1 and So2 are supplied to different audio output terminals among the audio output terminals 81, 82, and 83 and are transmitted from the respective audio output terminals to the AV amplifier. The audio stream So3 is supplied to the audio output terminal 84 as described above, and the operation audio of the audio 3 is output from the internal speaker as described above.

Since the audio streams of the audios 1, 2 and 3 are independently output to separate audio output terminals, without mixing, in the separate output mode, the audio in high quality can be played. If the audio 1 is music in particular, the music can be played purely.

Furthermore, in the undecoded output mode, the quality of audio can be increased by decoding the compressed data by a decoder of an external AV amplifier.

Also in the separate output mode, operations in the operation/setting unit 18 can independently and arbitrarily adjust the volumes of the audios 1, 2 and 3 and can mute an arbitrary audio among the audios 1, 2 and 3.

### [2. Other Embodiments]

Having described the examples of the case where a multiplexed audio stream recorded on a BD is to be played, the invention is applicable to a case where a multiplexed audio stream recorded on other recording media such as an optical disk than a BD or a case where a multiplexed audio stream received by broadcasting or network distribution, for example, is to be played.

Having described the examples of the case where the audio streams of three kinds of audio are multiplexed, the invention is also applicable to a case where the audio streams of two or four or more kinds of audio are multiplexed.

It should be understood by those skilled in the art that various modifications, combinations, sub-combinations and alterations may occur depending on design requirements and other factors insofar as they are within the scope of the appended claims or the equivalents thereof.

## Claims

1. An audio playing apparatus that plays a multiplexed audio stream resulting from the multiplexing of multiple kinds of audio,
wherein the apparatus can be switched at least between a mixing output mode for mixing decoded data or uncompressed data of the audio streams of multiple kinds of audio and outputting the result to one audio output terminal and a separate output mode for outputting the audio streams of multiple kinds of audio to separate audio output terminals independently.

2. The audio playing apparatus according to Claim 1,
wherein, when a part or all of the audio streams is or are compressed data in the separate output mode, the apparatus can be switched between an undecoded output mode for outputting the compressed data to an audio output terminal as it is and a decoded output mode for decoding and outputting the compressed data to an audio output terminal.

3. The audio playing apparatus according to Claim 1 or 2, the apparatus comprising:
an output switching circuit that outputs an audio stream output in the mixing output mode and audio stream outputs in the separate output mode to audio output terminals selected among multiple audio output terminals.

4. The audio playing apparatus according to Claim 3, the apparatus further comprising, as at least one audio output terminal of the multiple audio output terminals:
a circuit that converts the audio stream output to the corresponding audio output terminal to an analog audio signal; and
a speaker that receives the supply of the converted analog audio signal.

5. The audio playing apparatus according to any of Claims 1 to 4, wherein the multiplexed audio stream is multiplexed with a video stream and is recorded on a disk medium.

6. An audio playing method that plays a multiplexed audio stream resulting from the multiplexing of the audio streams of multiple kinds of audio, the method comprising the step of:
outputting the audio streams in at least one selected from a mixing output mode for mixing decoded data or uncompressed data of the audio streams of multiple kinds of audio and outputting the result to one audio output terminal and a separate output mode for outputting the audio streams of multiple kinds of audio to separate audio output terminals independently.

7. The audio playing method according to Claim 6, wherein, when a part or all of the audio streams is or are compressed data in the separate output mode, the audio streams are output in either one output mode selected from an undecoded output mode for outputting the compressed data to an audio output terminal as it is and a decoded output mode for decoding and outputting the compressed data to an audio output terminal.
